# EUROPÄISCHE PATENTSCHRIFT

(11) **EP 2 455 635 B1**
(45) Veröffentlichungstag und Bekanntmachung des Hinweises auf die Patenterteilung: **09.10.2019**
(21) Anmeldenummer: 11008980.2
(22) Anmeldetag: 11.11.2011
(51) Int. Cl.: F16F 1/26

(54) **Blattfeder und Verfahren zur Herstellung einer solchen Blattfeder**
Leaf spring and method for producing the same
Ressort à lame et procédé de fabrication d'un tel ressort à lame

(30) Priorität: 18.11.2010 DE 102010051560
(43) Veröffentlichungstag der Anmeldung: 23.05.2012
(73) Patentinhaber: Hendrickson Commercial Vehicle Systems Europe GmbH, 8750 Judenburg (AT)
(72) Erfinder: Bernhauser, Reinhold, 8750 Judenburg (AT); Brunnhofer, Herbert, 8753 Fohnsdorf (AT); Hochfellner, Rainer, 8732 Seckau (AT); Jelinek, Helfried, 8733 St. Marein (AT); Knuts, Konrad, 07920 Loviisa (FI); Kühnelt, Gerhard, 8750 Judenburg (AT); Leonards, Rainer, 52428 Jülich (DE); Madl, Sigfried, 8732 Seckau (AT); Nattland, Friedhelm, 41564 Kaarst (DE); Rudlstorfer, Bruno, 8762 Oberzeiring (AT); Schlottmann, Andreas, 40227 Düsseldorf (DE); Winckler, Fred, 8750 Judenburg (AT); Zamberger, Jörg, 8753 Fohnsdorf (AT)
(74) Vertreter: Beer & Partner Patentanwälte KG

(56) Entgegenhaltungen:
- EP-A1- 0 533 146
- FR-A5- 2 095 697
- GB-A- 247 074
- GB-A- 754 485
- US-A- 3 190 632
- US-A1- 2007 108 717

## Beschreibung

Die Erfindung betrifft eine Blattfeder für das Fahrwerk eines Fahrzeugs mit mindestens einem metallischen Federblatt, das mindestens ein Auge zur drehbaren Befestigung der Blattfeder an einem weiteren Bauteil des Fahrwerks aufweist, sowie ein Verfahren zur Herstellung einer solchen Blattfeder.

Blattfedern kommen insbesondere in den Fahrwerken von Nutzfahrzeugen und Schienenfahrzeugen zum Einsatz. Blattfedern können ein- oder mehrschichtig ausgebildet sein, wobei bei den mehrschichtigen Blattfedern mehrere Federblätter übereinander in Paketen angeordnet sind, die beispielsweise durch Federklemmen zusammengehalten werden. Die bekannten Blattfedern weisen in der Regel an einem oder an beiden Enden ein Auge auf, dass zur drehbaren Befestigung der Blattfeder an einem weiteren Bauteil des Fahrwerks des Fahrzeugs dient.

Die Augen werden bei metallischen Blattfedern, d.h. bei solchen, bei denen das oder die einzelnen Federblätter aus Metall hergestellt sind, durch Umformen hergestellt. Konkret werden ein oder mehrere Federblätter der späteren Blattfeder während des Herstellungsprozesses, bei dem die Federblätter zunächst urgeformt und dann in den erforderlichen Querschnitt gewalzt werden, endseitig umgebogen, so dass eine nahezu vollständig geschlossene Durchgangsöffnung ausgebildet wird. Diese Art der Herstellung von Augen einer metallischen Blattfeder ist schnell und einfach und mit geringen Kosten durchführbar. Ein derart hergestelltes Federblatt ist beispielweise in der US 2007/0108717 A1 offenbart.

Aus dem Stand der Technik sind auch nicht-metallische Blattfedern für Fahrwerke von Fahrzeugen bekannt, die insbesondere mehrschichtig aus Kunststoffen und faserverstärkten Kunststoffen ausgebildet sein können. Aus der EP 0 956 981 A2 ist beispielsweise eine solche Blattfeder bekannt, die einen Kern aus einem Polymer aufweist, der gerade nicht durch Fasern verstärkt sein soll, und der zudem beidseitig, d.h. ober- und unterseitig mit einem Laminat aus einem faserverstärkten Werkstoff verstärkt sein soll. Die Augen zur Befestigung der Blattfeder an dem Fahrwerk des Fahrzeugs sind in die beiden Enden des Polymer-Kerns eingebracht.

Ausgehend von diesem Stand der Technik lag der Erfindung die Aufgabe zugrunde, eine verbesserte metallische Blattfeder für das Fahrwerk eines Fahrzeugs und ein entsprechendes Verfahren zur Herstellung einer solchen Blattfeder anzugeben.

Diese Aufgabe wird durch die Gegenstände der unabhängigen Patentansprüche 1 und 7 erfüllt. Vorteilhafte Ausführungsformen sind Gegenstand der jeweiligen abhängigen Patentansprüche und ergeben sich aus der nachfolgenden Beschreibung der Erfindung. Der Kern der Erfindung sieht vor, bei einer Blattfeder für das Fahrwerk eines Fahrzeugs, die mindestens ein metallisches Federblatt umfasst, das mindestens ein Auge zur drehbaren Befestigung der Blattfeder an einem weiteren Bauteil des Fahrwerks aufweist, das Auge als Öffnung (vorzugsweise als geschlossene Durchgangsöffnung) in den Federblattkörper des Federblatts einzubringen.

Erfindungsgemäß ist vorgesehen, dass das Federblatt im Bereich des Auges mit einer relativ zu dem sich anschließenden Abschnitt des Federblattes größeren Federdicke senkrecht zur Längsachse des Auges ausgebildet ist, indem das Federblatt im Bereich der Öffnung ungewalzt oder nur in einem geringen Ausmaß gewalzt ist, so dass die Stärke im Bereich der Öffnung zumindest weitgehend der Ausgangsstärke entspricht, und dass das Auge als Öffnung in den Federblattkörper des Federblattes spanend eingebracht ist. Anders als dies von metallischen Blattfedern aus dem Stand der Technik bekannt ist, wird das Auge somit nicht durch ein Umformen des Federblattkörpers eines oder mehrer Federblätter der Blattfeder erzeugt, sondern es wird eine geschlossene Durchgangsöffnung in den Federblattkörper eines der Federblätter eingebracht.

Durch die erfindungsgemäße Ausgestaltung einer Blattfeder kann deren Gewicht reduziert werden, ohne deren Stabilität zu verringern. Da dem Leichtbau von Fahrzeugen und insbesondere von Straßenfahrzeugen erhebliche Bedeutung zukommt, kann dieser Vorteil einen gegebenenfalls höheren Fertigungsaufwand, der mit dem (nachträglichen) Einbringen der Öffnung in den Federblattkörper des Federblatts im Vergleich zu dem bekannten Umformen der Enden einzelner Federblätter verbunden ist, mehr als kompensieren.

Die Öffnung zur Ausbildung des Auges wird vorzugsweise im "kalten" Zustand des Federblatts eingebracht, d.h. bei einer Temperatur des Federblatts die deutlich unterhalb der Rekristallisationstemperatur liegt. Besonders bevorzugt erfolgt dies, nachdem das Federblatt bereits (weitgehend) in seine Endform umgeformt wurde.

Besonders bevorzugt erfolgt das Einbringen der Öffnung durch Bohren oder Fräsen.

Selbstverständlich besteht jedoch auch die Möglichkeit, die Öffnung im "heißen" Zustand des Federblatts einzubringen, d.h. wenn der Werkstoff des Federblattkörpers im Bereich der Rekristallisationstemperatur oder darüber liegt. Dies kann insbesondere durch Stanzen oder Bohren und insbesondere während des Ur- oder Umformprozesses zur Herstellung des Federblattkörpers erfolgen.

Vorzugsweise kann vorgesehen sein, das Auge im Bereich eines Endes der Blattfeder anzuordnen.

Im Rahmen der Erfindung ist das Federblatt im Bereich des Auges verstärkt ausgeführt, um eine Festigkeitsverringerung in diesem Bereich, die mit dem Einbringen der Öffnung in den Federblattkörper verbunden sein kann, zu kompensieren. Dies kann beispielsweise durch eine entsprechende Formgebung des Federblattkörpers selbst erfolgen, indem dieses im Bereich der Öffnung beispielsweise verdickt ausgeführt ist. Dies erfolgt erfindungsgemäß dadurch, dass die entsprechenden Bereiche des Federblatts nicht oder nur in einem geringeren Ausmaß gewalzt werden und somit ggf. die Ausgangsstärke (weitgehend) behalten. Eine Verstärkung kann auch durch das Anbringen einer Verstärkungsschicht auf den Federblattkörper im Bereich der Öffnung erfolgen. Zudem besteht die Möglichkeit, die Verstärkung werkstofftechnisch zu realisieren, indem in den Werkstoff des Federblattkörpers im Bereich der Öffnung beispielsweise Verstärkungselemente (z.B. Faser, Partikel, etc.) eingebracht werden oder ein anderer Werkstoff als im Rest des Federblatts zum Einsatz kommt.

In einer weiterhin bevorzugten Ausführungsform der erfindungsgemäßen Blattfeder ist eine Lagerbuchse vorgesehen, die in die das Auge ausbildende Öffnung eingebracht ist. Diese kann insbesondere aus einem anderen (insbesondere metallischen) Werkstoff als der Federblattkörper bestehen, wobei dieser Werkstoff insbesondere für die Anforderungen als Lagerwerkstoff, d.h. insbesondere geringe Elastizität und hohe Verschleißfestigkeit, ausgelegt sein kann. Dadurch ist es möglich, dass die Federblätter der erfindungsgemäßen Blattfeder aus hoch-elastischem Federstahl zu fertigen, während die Lagerbuchse aus einem entsprechend verschleißfesten und geringelastischen Lagerstahl besteht. Besonders bevorzugt kommen Lagerbuchsen zum Einsatz, die eine hochelastische Komponente, insbesondere aus Gummi aufweisen. Diese Komponente kann beispielsweise als Mittelring in Verbindung mit einem Außen- und einem Innenring aus (Lager-)Stahl eingesetzt werden (Stahl-Gummi-Stahl-Lagerbuchse) oder als Außenring in Verbindung mit einem Innenring aus (Lager-)Stahl (Gummi-Stahl-Lagerbuchse).

Das Befestigen der Lagerbuchse in der Durchgangsöffnung in dem Federblattkörper erfolgt vorzugsweise mittels Presssitz, d.h. kraftschlüssig. Es sind jedoch alle beliebigen Befestigungsmöglichkeiten, wie beispielsweise Verkleben, Verschweißen (d.h. stoffschlüssig) oder auch die Verwendung einer Gewinde- oder sonstigen Formschlüssigen Verbindung möglich.

In einer weiterhin bevorzugten Ausführungsform der erfindungsgemäßen Blattfeder ist an jedem der beiden (in Längsrichtung der Blattfeder liegenden) Enden ein Auge vorgesehen, das erfindungsgemäß als Öffnung in den Federblattkörper des Federblatts eingebracht ist.

Alternativ kann jedoch auch vorgesehen sein, an dem dem ersten Auge gegenüberliegenden Ende der Blattfeder Befestigungsmittel zur Befestigung eines Funktionselements des Fahrwerks und insbesondere eines Luftfederbalgs vorzusehen, wie dies beispielsweise von Lastkraftwagen und dort insbesondere von den Radaufhängungen von Sattelaufliegern bekannt ist.

Bei einem erfindungsgemäßen Fahrzeug mit einem Fahrwerk, bei dem die erfindungsgemäße Blattfeder eingesetzt wird, ist die Blattfeder derart angeordnet, dass sie sich in Fahrtrichtung des Fahrzeugs erstreckt. Als eine sich in Fahrtrichtung des Fahrzeugs erstreckende Blattfeder wird auch eine solche Blattfeder verstanden, die sich im Wesentlichen in Fahrzeugrichtung erstreckt, insbesondere bevorzugt eine Blattfeder, bei der der Winkel zwischen der Fahrzeugrichtung und der Längsachse der Blattfeder kleiner als 45°, insbesondere bevorzugt kleiner als 25° und besonders bevorzugt kleiner als 10° ist.

Die Erfindung wird nachfolgend anhand von in den Zeichnungen dargestellten Ausführungsbeispielen näher erläutert.

In den Zeichnungen zeigt:
- Fig. 1:: eine erfindungsgemäße Blattfeder in einer ersten Ausführungsform in einer isometrischen Ansicht;
- Fig. 2:: eine Seitenansicht der Blattfeder gemäß Fig. 1, jedoch ohne Lagerbuchsen;
- Fig. 3:: eine Seitenansicht der Blattfeder gemäß Fig. 1;
- Fig. 4:: eine Aufsicht der Blattfeder gemäß Fig. 1;
- Fig. 5:: eine erfindungsgemäße Blattfeder in einer zweiten Ausführungsform in einer isometrischen Ansicht;
- Fig. 6:: eine Seitenansicht der Blattfeder gemäß Fig. 5, jedoch ohne Lagerbuchsen;
- Fig. 7:: eine Seitenansicht der Blattfeder gemäß Fig. 5;
- Fig. 8:: eine Aufsicht der Blattfeder gemäß Fig. 5.

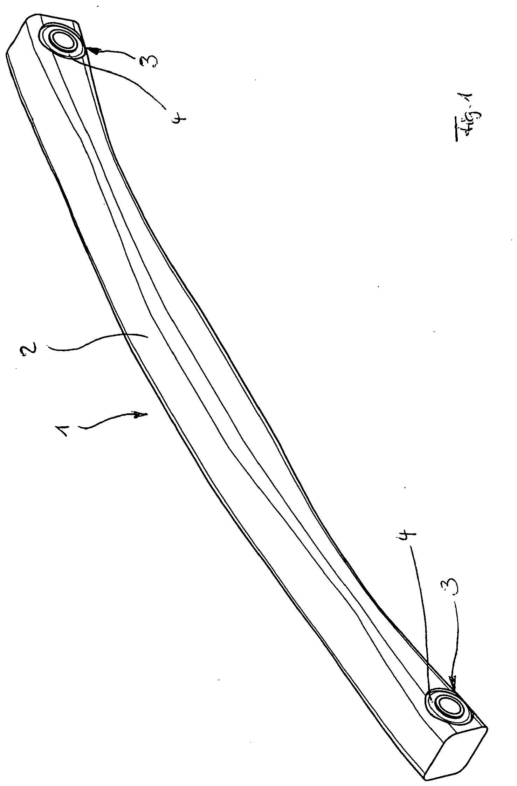

Die Fig. 1 bis 4 zeigen in verschiedenen Ansichten eine erfindungsgemäße Blattfeder 1 in einer ersten Ausführungsform. Konkret handelt es sich um eine sogenannte Parabelfeder, wie sie u.a. in Fahrwerken von Lastkraftwagen und dort insbesondere an den Achsen einer Zugmaschine zum Einsatz kommen. Eine Besonderheit der Parabelfeder liegt darin, dass sich deren Flächenträgheitsmoment aufgrund einer variierenden Federdicke über der Länge ändert.

Die dargestellte Blattfeder 1 besteht aus lediglich einem Federblatt 2, das aus herkömmlichem Federstahl gefertigt ist. Das Federblatt 2 weist an seinen beiden Enden jeweils ein Auge 3 auf, das erfindungsgemäß als Öffnung (konkret als geschlossene Durchgangsöffnung in Querrichtung) in einen Federblattkörper des Federblatts 2 eingebracht worden ist. Dies erfolgte im "kalten" Zustand des Federblatts 2, d.h. nach einem Abkühlen bis zu einer Temperatur weit unterhalb der Rekristallisationstemperatur, z.B. durch Bohren.

In jedes der Augen 3 ist jeweils eine Lagerbuchse 4 mittels eines Presssitzes eingebracht worden. Dies erfolgt ebenfalls im "kalten" Zustand des Federblatts, wobei die Lagerbuchsen 4 mittels eines herkömmlichen (nicht dargestellten) Werkzeugs in die Augen 3 eingepresst werden, wo sie kraftschlüssig gehalten wird.

Über die in den Augen 3 der Blattfeder 1 angeordneten Lagerbuchsen 4 wird die Blattfeder 1 (beidseitig) drehbar mit weiteren Bauteilen eines Fahrwerks des Lastkraftwagens verbunden. Eine Befestigung einer Radachse oder einer Antriebswelle des Lastkraftwagens erfolgt in dem durch eine strichpunktierte Linie dargestellten Zentrum der Blattfeder 1 mittels Bridenschrauben (nicht dargestellt).

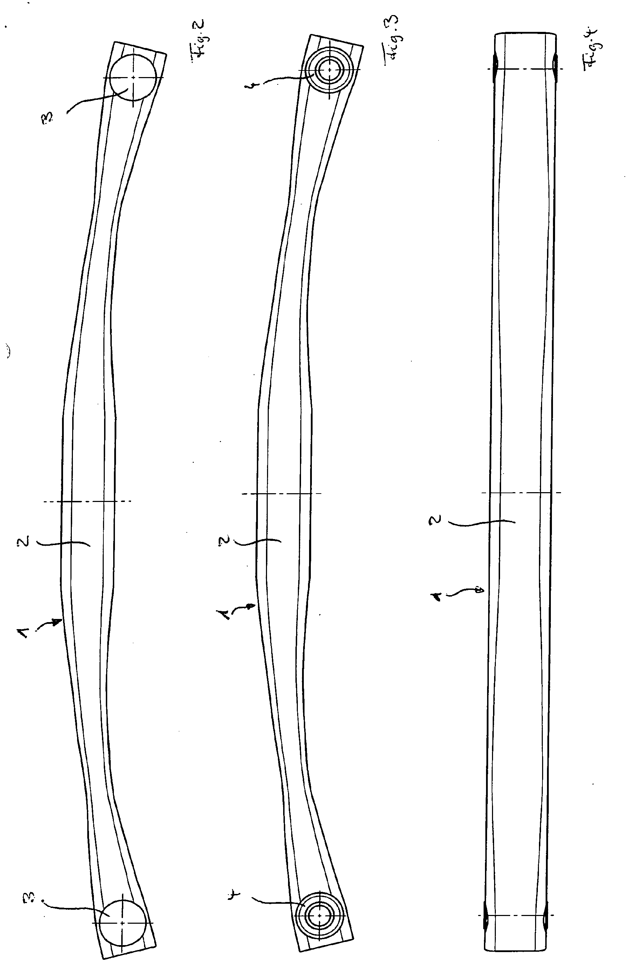

Wie sich insbesondere aus den Fig. 2 und 3 ergibt, ist die Blattfeder 1 bzw. das einzige Federblatt 2 endseitig, d.h. im Bereich der Augen verdickt, d.h. mit einer relativ (zu dem sich anschließenden Abschnitt des Federblatts) großen Federdicke (senkrecht zur Längsachse der Augen) ausgebildet. Dies ermöglicht - bei ausreichender Stabilität - einen relativ großen Durchmesser des jeweiligen Auges 3, wodurch Lagerbuchsen 4 mit einem entsprechend großen Durchmesser verwendet werden können.

Die Blattfeder 1 ist als warmgewalzter Flachstahl aus Federstahl nach DIN EN 10092-1 hergestellt.

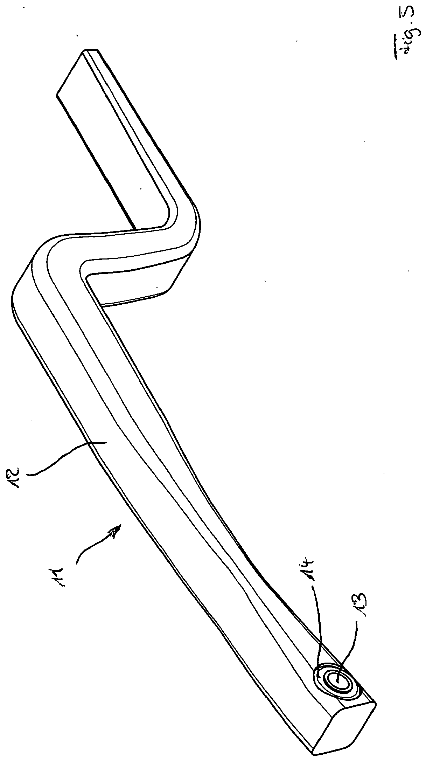

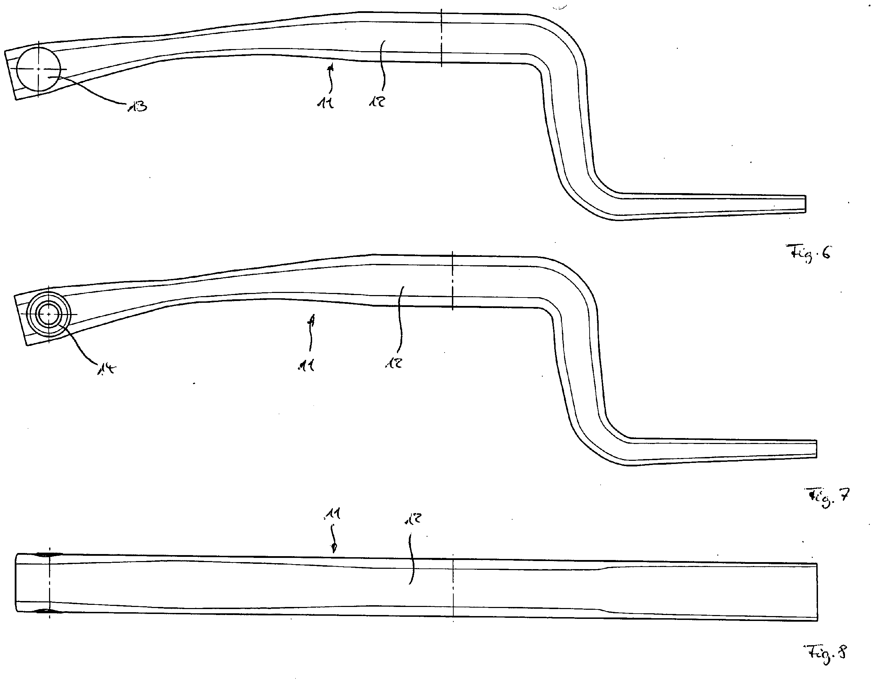

Die Fig. 5 bis 8 zeigen eine erfindungsgemäße Blattfeder 10 in einer zweiten Ausführungsform. Diese unterscheidet sich von der in den Fig. 1 bis 4 dargestellten Ausführungsform insbesondere hinsichtlich ihres Verwendungszwecks als Lenkerfeder und der damit verbundenen unterschiedlichen Formgebung.

Die Formgebung der in den Fig. 5 bis 8 links dargestellten Hälfte der Blattfeder 11 entspricht noch derjenigen der Parabelfeder der Fig. 1 bis 4 (in derselben Hälfte). Dort ist in einem verdickten Ende des einzigen Federblatts 12 ein Auge 13 auf erfindungsgemäße Weise in den Federblattkörper des Federblatts 12 eingebracht worden, wobei das Auge 13 eine durch einen Presssitz gehaltene Lagerbuchse 14 aufnimmt.

Die gegenüberliegende Hälfte der Lenkerfeder ist dagegen durch einen zweimalige Umbiegung um nahezu 90° gekennzeichnet, wodurch - im montierten Zustand der Lenkerfeder an dem Lastkraftwagen - ein Freiraum für die Anordnung eines Luftfederbalgs (nicht dargestellt) gebildet ist (es sind auch gerade oder nahezu gerade Lenkerkonturen möglich). Der Luftfederbalg ist dabei einseitig mit einem (weiteren) Teil des Fahrwerks verbunden und auf der gegenüberliegenden Seite mit dem freien Ende der Lenkerfeder. Diese weist hierzu (nicht dargestellte) Durchgangsöffnung für die Aufnahme von Schrauben auf. Diese können ebenfalls - wie die Augen 14 - gebohrt sein. Vorzugsweise ist jedoch vorgesehen, diese im "heißen" Zustand des Federblatts während der Fertigung auszustanzen.

Die Befestigung einer Radachse (nicht dargestellt) des Lastkraftwagens erfolgt wie bei dem Ausführungsbeispiel der Fig. 1 bis 3 in dem durch eine strichpunktierte Linie dargestellten Zentrum der Blattfeder 11 mittels Bridenschrauben.

## Patentansprüche

1. Blattfeder (1; 11) für das Fahrwerk eines Fahrzeugs, mit mindestens einem metallischen Federblatt (2; 12), das mindestens ein Auge (3; 13) zur drehbaren Befestigung der Blattfeder (1; 11) an einem weiteren Bauteil des Fahrwerks aufweist, wobei das Federblatt (2; 12) urgeformt und dann in den erforderlichen Querschnitt gewalzt ist, wobei das Federblatt (2; 12) im Bereich des Auges (3; 13) mit einer relativ zu dem sich anschließenden Abschnitt des Federblattes (2; 12) größeren Federdicke senkrecht zur Längsachse des Auges (3; 13) ausgebildet ist, **dadurch gekennzeichnet, dass** das Federblatt (2; 12) im Bereich der Öffnung ungewalzt oder nur in einem geringen Ausmaß gewalzt ist, so dass die Stärke im Bereich des Auges (3; 13) zumindest weitgehend der Ausgangsstärke entspricht, und dass das Auge (3; 13) als Öffnung in den Federblattkörper des Federblattes (2; 12) spanend eingebracht ist.

2. Blattfeder (1; 11) gemäß Anspruch 1, **dadurch gekennzeichnet, dass** die Öffnung als geschlossene Durchgangsöffnung ausgebildet ist.

3. Blattfeder (1; 11) gemäß Anspruch 1 oder 2, **dadurch gekennzeichnet, dass** das Auge (3; 13) im Bereich eines Endes der Blattfeder (1; 11) angeordnet ist.

4. Blattfeder (1; 11) gemäß einem der vorhergehenden Ansprüche, **gekennzeichnet durch** eine in die Durchgangsöffnung des Auges (3; 13) eingebrachte Lagerbuchse (4; 14).

5. Blattfeder (1) gemäß Anspruch 3 oder einem davon abhängigen Anspruch, **dadurch gekennzeichnet, dass** im Bereich des gegenüberliegenden Endes der Blattfeder (1) ein zweites Auge (3) vorgesehen ist, das als Öffnung in den Federblattkörper des Federblatts (2) eingebracht ist.

6. Blattfeder (1; 11) gemäß Anspruch 3 oder einem davon abhängigen Anspruch, **gekennzeichnet durch** im Bereich des gegenüberliegenden Endes der Blattfeder (11) angeordnete Befestigungsmittel zur Befestigung eines Luftfederbalgs.

7. Verfahren zur Herstellung einer Blattfeder (1; 11) mit mindestens einem metallischen Federblatt (2; 12) für das Fahrwerk eines Fahrzeugs, mit mindestens einem Auge (3; 13) für die drehbare Befestigung der Blattfeder (1; 11) an einem weiteren Bauteil des Fahrwerks, wobei das Federblatt (2; 12) urgeformt und dann in den erforderlichen Querschnitt gewalzt wird, wobei das Federblatt (2; 12) im Bereich des Auges (3; 13) mit einer relativ zu dem sich anschließenden Abschnitt des Federblattes (2; 12) größeren Federdicke senkrecht zur Längsachse des Auges (3; 13) ausgebildet wird, **dadurch gekennzeichnet, dass** das Federblatt (2; 12) im Bereich der Öffnung ungewalzt bleibt oder nur in einem geringen Ausmaß gewalzt wird, so dass die Ausgangsstärke im Bereich des Auges (3; 13) zumindest weitgehend behalten wird, und dass zur Ausbildung des Auges (3; 13) eine Öffnung in den Federblattkörper eines Federblattes (2; 12) spanend eingebracht wird.

8. Verfahren gemäß Anspruch 7, **dadurch gekennzeichnet, dass** eine Lagerbuchse (4; 14) kraftschlüssig in der Öffnung fixiert wird.

9. Fahrzeug mit einem Fahrwerk mit einer Blattfeder, **gekennzeichnet durch** eine Blattfeder nach einem der Ansprüche 1 bis 6, wobei die Blattfeder derart angeordnet ist, dass sie sich in Fahrtrichtung des Fahrzeugs erstreckt.

## Claims

1. Leaf spring (1; 11) for the chassis of a vehicle, having at least one metallic spring leaf (2; 12) which has at least one eye (3; 13) for the rotatable fastening of the leaf spring (1; 11) to a further component of the chassis, the spring leaf (2; 12) being primary-formed and then rolled into the required cross-section, the spring leaf (2; 12) being formed in the region of the eye (3; 13) with a spring thickness, perpendicular to the longitudinal axis of the eye (3; 13), which is greater than the adjoining section of the spring leaf (2; 12), **characterised in that** the spring leaf (2; 12) in the region of the opening is unrolled or only rolled by a small amount, so that the thickness in the region of the eye (3; 13) corresponds at least largely to the starting thickness, and that the eye (3; 13) is made as an opening in the spring leaf body of the spring leaf (2; 12) by cutting.

2. Leaf spring (1; 11) according to claim 1, **characterised in that** the opening is in the form of a closed through-opening.

3. Leaf spring (1; 11) according to claim 1 or 2, **characterised in that** the eye (3; 13) is situated in the region of an end of the leaf spring (1; 11).

4. Leaf spring (1; 11) according to any one of the preceding claims, **characterised by** a bearing bushing (4; 14) introduced into the through-opening of the eye (3; 13).

5. Leaf spring (1) according to claim 3 or a claim dependent thereon, **characterised in that** a second eye (3), which is made as an opening in the spring leaf body of the spring leaf (2), is provided in the region of the opposite end of the leaf spring (1).

6. Leaf spring (1; 11) according to claim 3 or a claim dependent thereon, **characterised by** fastening means for fastening an air spring, which are situated in the region of the opposite end of the leaf spring (11).

7. Method for producing a leaf spring (1; 11) having at least one metallic spring leaf (2; 12) for the chassis of a vehicle, having at least one eye (3; 13) for the rotatable fastening of the leaf spring (1; 11) to a further component of the chassis, the spring leaf (2; 12) being primary-formed and then rolled into the required cross-section, the spring leaf (2; 12) being formed in the region of the eye (3; 13) with a spring thickness, perpendicular to the longitudinal axis of the eye (3; 13), which is greater than the adjoining section of the spring leaf (2; 12), **characterised in that** the spring leaf (2; 12) in the region of the opening remains unrolled or is only rolled by a small amount, so that the starting thickness in the region of the eye (3; 13) is at least largely maintained, and that an opening is made in the spring leaf body of a spring leaf (2; 12) by cutting to form the eye (3; 13).

8. Method according to claim 7, **characterised in that** a bearing bushing (4; 14) is fixed in the opening in a force-fitting manner.

9. Vehicle having a chassis having a leaf spring, **characterised by** a leaf spring according to any one of claims 1 to 6, wherein the leaf spring is arranged such that it extends in the direction of travel of the vehicle.

## Revendications

1. Ressort à lame (1 ; 11) destiné au châssis d'un véhicule, doté d'au moins une lame ressort (2 ; 12) métallique, qui comporte au moins un oeillet (3 ; 13) destiné à la fixation rotative du ressort à lame (1 ; 11) sur un autre élément constitutif du châssis, la lame ressort (2 ; 12) étant façonnée primairement puis laminée à la section transversale requise, dans la zone de l'oeillet (3 ; 13), la lame ressort (2 ; 12) étant conçue avec une épaisseur de lame supérieure à celle de la section qui s'y raccorde de la lame ressort (2 ; 12), à la perpendiculaire de l'axe longitudinal de l'oeillet (3 ; 13), **caractérisé en ce que** dans la zone de l'orifice, la lame ressort (2 ; 12) n'est pas laminée ou seulement laminée dans une faible mesure, de sorte que l'épaisseur dans la zone de l'oeillet (3 ; 13) corresponde amplement à l'épaisseur initiale et **en ce que** l'oeillet (3 ; 13) est ménagé par enlèvement de copeaux sous la forme d'un orifice dans le corps de lame ressort de la lame ressort (2 ; 12).

2. Ressort à lame (1 ; 11) selon la revendication 1, **caractérisé en ce que** l'orifice est conçu sous la forme d'un orifice de passage fermé.

3. Ressort à lame (1 ; 11) selon la revendication 1 ou 2, **caractérisé en ce que** l'oeillet (3 ; 13) est placé dans la zone d'une extrémité du ressort à lame (1 ; 11).

4. Ressort à lame (1 ; 11) selon l'une quelconque des revendications précédentes, **caractérisé par** un coussinet de palier (4 ; 14) ménagé dans l'orifice de passage de l'oeillet (3 ; 13).

5. Ressort à lame (1) selon la revendication 3 ou une revendication en dépendant, **caractérisé en ce que** dans la zone de l'extrémité opposée du ressort à lame (1) est prévu un deuxième oeillet (3) qui est ménagé sous la forme d'un orifice dans le corps de lame ressort de la lame ressort (2) .

6. Ressort à lame (1 ; 11) selon la revendication 3 ou une revendication en dépendant, **caractérisé par** des moyens de fixation placés dans la zone de l'extrémité opposée du ressort à lame (11), pour la fixation d'un ressort pneumatique.

7. Procédé de fabrication d'un ressort à lame (1 ; 11) pourvu d'au moins une lame ressort (2 ; 12) métallique, destiné au châssis d'un véhicule, comportant au moins un oeillet (3 ; 13) pour la fixation en rotation du ressort à lame (1 ; 11) sur un autre élément constitutif du châssis, la lame ressort (2 ; 12) étant façonnée primairement puis laminée à la section transversale requise, la lame ressort (2 ; 12) étant conçue dans la zone de l'oeillet (3 ; 13) avec une épaisseur de lame supérieure à celle de la section qui s'y raccorde de la lame ressort (2 ; 12), à la perpendiculaire de l'axe longitudinal de l'oeillet (3 ; 13), **caractérisé en ce que** dans la zone de l'orifice, la lame ressort (2 ; 12) reste non laminée ou seulement laminée dans une faible mesure, de sorte à préserver amplement l'épaisseur initiale dans la zone de l'oeillet (3 ; 13) et **en ce que** pour créer l'oeillet (3 ; 13), un orifice est ménagé par enlèvement de copeaux dans le corps de lame ressort d'une lame ressort (2 ; 12)

8. Procédé selon la revendication 7, **caractérisé en ce qu'**un coussinet de palier (4 ; 14) est fixé par complémentarité de force dans l'orifice.

9. Véhicule, pourvu d'un châssis comprenant un ressort à lame, **caractérisé par** un ressort à lame selon l'une quelconque des revendications 1 à 6, le ressort à lame étant placé de sorte à s'étendre dans la direction de déplacement du véhicule.
